(19) **Europäisches Patentamt**
**European Patent Office**
**Office européen des brevets**

(11) **EP 4 152 546 A1**

(12) **EUROPEAN PATENT APPLICATION**

(43) Date of publication:
**22.03.2023 Bulletin 2023/12**

(21) Application number: **22194132.1**

(22) Date of filing: **06.09.2022**

(51) International Patent Classification (IPC):
**H02J 3/18** (2006.01)      **H02J 13/00** (2006.01)

(52) Cooperative Patent Classification (CPC):
**H02J 3/18; H02J 13/00002; H02J 2203/20**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:    **09.09.2021   US 202163242135 P
25.07.2022   US 202217814535**

(71) Applicant: **Siemens Aktiengesellschaft
80333 München (DE)**

(72) Inventors:
• **FAN, Ting-Han
Princeton, NJ, 08540 (US)**
• **WANG, Yubo
Princeton, NJ, 08540 (US)**
• **MUENZ, Ulrich
Princeton, NJ, 08540 (US)**

(74) Representative: **Horn Kleimann Waitzhofer
Patentanwälte PartG mbB
Ganghoferstraße 29a
80339 München (DE)**

(54) **SYSTEM AND METHOD FOR CONTROLLING LARGE SCALE POWER DISTRIBUTION SYSTEMS USING REINFORCEMENT LEARNING**

(57)    A method for controlling a power distribution system having a number of discretely controllable devices includes processing a system state, defined by observations acquired via measurement signals from a number of meters, using a reinforcement learned control policy including a deep learning model, to output a control action including integer actions for the controllable devices. The integer actions are determined by using learned parameters of the deep learning model to compute logits for a categorical distribution of predicted actions from the system state, that define switchable states of the controllable devices. The logits are processed to reduce the categorical distribution of predicted actions for each controllable device to an integer action for that controllable device. The control action is communicated to the controllable devices for effecting a change of state of one or more of the controllable devices, to regulate voltage and reactive power flow in the power distribution system.

FIG. 2

**Description**

TECHNICAL FIELD

The present disclosure relates, in general, to control of power distribution systems to achieve voltage regulation. Disclosed embodiments relate, in particular, to a methodology suitable for controlling voltage and reactive power flow in large scale power distribution systems using reinforcement learning.

BACKGROUND

Circuits in power distribution systems usually follow a radial topology, which may cause nodes that are far away from the substation (root node) to experience undervoltage. For example, voltage at the end of a feeder may drop below the acceptable range of $\pm$ 5% of nominal the nominal voltage. Active control of voltage and reactive power flow may be desirable for maintaining healthy operation of power distribution systems.

Volt-var control refers to the control of voltage (Volt) and reactive power (Var) in power distribution systems. Volt-var control usually involves optimally dispatching controllable devices or actuators of a power distribution system to maintain voltage profile at the nodes as well as reduce power losses across the power distribution system.

The volt-var control problem may be subject to network constraints of the distribution system and device constraints of the controllable devices. The network constraint may bring nonconvexity and make it hard to apply traditional optimization algorithms. The device constraints may restrict the decision variables to be discrete, making the modeling and optimization for the decisions highly nontrivial. Hence, the volt-var control problem may be hard to scale to a system with thousands of buses, which is a typical size for many power distribution systems.

SUMMARY

Briefly, aspects of the present disclosure provide a scalable technique suitable for volt-var control in large scale power distribution systems using reinforcement learning.

A first aspect of the disclosure provides a method for controlling a power distribution system comprising a number of controllable devices, wherein at least some of the controllable devices are discretely controllable devices operable in discrete switchable states. The method comprises acquiring observations via measurement signals communicated by a plurality of meters in the power distribution system to define a system state. The method further comprises processing the system state using a reinforcement learned volt-var control policy comprising a deep learning model to output a control action that includes respective integer actions for the discretely controllable devices. The integer actions are determined by: using learned parameters of the deep learning model to compute logits for a categorical distribution of predicted actions from the system state, wherein the predicted actions define switchable states of the discretely controllable devices, and processing the logits to reduce the categorical distribution of predicted actions for each discretely controllable device to an integer action for that discretely controllable device. The method comprises communicating the control action to the controllable devices for effecting a change of state of one or more of the controllable devices, to regulate voltage and reactive power flow in the power distribution system.

A further aspect of the disclosure provides a computer-implemented method for training a control policy for volt-var control of a power distribution system using reinforcement learning in a simulation environment, the power distribution system comprising a number of controllable devices, wherein at least some of the controllable devices are discretely controllable devices operable in discrete switchable states. The method comprises acquiring observations by reading state signals from the simulation environment to define a system state of the power distribution system. The method further comprises processing the system state using the control policy to output a control action that includes respective integer actions for the discretely controllable devices, wherein the control policy comprises a deep learning model. The integer actions are determined by using learnable parameters of the deep learning model to compute logits for a categorical distribution of predicted actions from the system state, wherein the predicted actions define switchable states of the discretely controllable devices; for each discretely controllable device, creating a discretized vector representation of the predicted actions based on the respective logits using a straight-through estimator; and reducing the discretized vector representation of the predicted actions to an integer action for the respective discretely controllable device using a linear transformation. The method further comprises updating the learnable parameters of the control policy by computing a policy loss based on the control action, the policy loss being dependent on evaluation of a reward function defined by a volt-var optimization objective.

Other aspects of the disclosure implement features of the above-described method in systems and computer program products for volt-var control in a power distribution system.

Additional technical features and benefits may be realized through the techniques of the present disclosure. Embodiments and aspects of the disclosure are described in detail herein and are considered a part of the claimed subject matter. For a better understanding, refer to the detailed description and to the drawings.

BRIEF DESCRIPTION OF THE DRAWINGS

The foregoing and other aspects of the present disclosure are best understood from the following detailed description when read in connection with the accompanying drawings. To easily identify the discussion of any element or act, the most significant digit or digits in a reference number refer to the figure number in which the element or act is first introduced.

FIG. 1 illustrates an example topology of a power distribution system having controllable devices for controlling voltage and reactive power flow.

FIG. 2 is a schematic illustration of a system for controlling voltage and reactive power flow in a power distribution system using reinforcement learning, according to an example embodiment.

FIG. 3 is a schematic illustration of a control policy incorporating integer reparameterization, according to an example embodiment.

FIG. 4 is a schematic illustration of a soft actor-critic (SAC) architecture incorporating integer reparameterization, according to an example embodiment.

FIG. 5 illustrates a graphical comparison of experimental results on volt-var control in power distribution systems using (a) an SAC-based policy with integer reparameterization according to a disclosed embodiment, (b) a PPO-based policy and (c) a random policy,

FIG. 6 illustrates a computing system that can support volt-car control of a power distribution system according to disclosed embodiments.

DETAILED DESCRIPTION

Volt-var control involves operating a power distribution system via controlling voltage and reactive power flow to maintain healthy operation of the power distribution system. In particular, volt-var control may be implemented to optimize the operation of controllable devices to minimize power delivery losses as well as maintain the voltage profile at each bus or node of the power distribution system.

In the context of the present description, a "controllable device" or "actuator" refers to a device or component of a power distribution system that is controllable to switch between multiple discrete or continuous states, to regulate voltage and/or reactive power flow in the power distribution system. The present description considers three types of controllable devices, namely, voltage regulators, capacitors and batteries. A voltage regulator may be considered as a switchable transformer operable in multiple states, defined by a tapping number. By changing the tapping number (i.e., by adjusting the output side voltage), a voltage difference between nodes connected to the input side and the output side of the voltage regulator may be adjusted. A capacitor can function as a storage for reactive power. Switching ON a capacitor from an OFF state may increase reactive power flow and bring up voltage profiles. A battery can be used for power management on the load side, for example, for compensating for large loads. Depending on the construction, a battery may have discrete or continuous switchable states.

A power distribution system may comprise any combination of the above-described types of controllable devices, among other types of devices, for implementing volt-var control. The operational change of any single device may potentially result in a change over the entire power distribution system. Thus, at the center of the volt-var control is an optimization for voltage profiles and power losses governed by physical constraints of the power distribution system.

The volt-var control problem can be formulated as an optimum power flow (OPF) problem that involves optimization of an objective function subject to the physical constraints. The objective function is referred to herein as a "volt-var optimization objective." With the primary goal being voltage regulation, the volt-var optimization objective may typically include a cost for voltage violation at nodes. According to disclosed embodiments, the volt-var optimization objective may be defined by a combination of costs, represented below as:

$$\min_{x:\{P_{bat},TapNum_{reg},Status_{cap}\}} f_{volt}(x) + f_{ctrl}(x) + f_{power}(x) \qquad (1)$$

In equation (1), $f_{volt}$ is a cost for voltage violation at nodes, $f_{power}$ is a cost for power losses, and $f_{ctrl}(x)$ is a cost for control error pertaining to frequency of change of status of the controllable grid assets (actuators), to prevent actuator wear out by penalizing the actuator status from changing too frequently. In this problem, three different types of actuators are considered, namely voltage regulators (*reg*), capacitors (*cap*) and batteries (*bat*). The described actuators are considered to be discretely controllable, i.e., operable in discrete switchable states. A battery (*bat*) may be operable in switchable states defined by a discharge powers $P_{bat}$ which can be discrete (i.e., a finite number of states) or continuous, a capacitor (*cap*) may be operable in switchable states $Status_{cap}$ that can include binary ON/OFF states, and a voltage regulator *(reg)* may be operable in switchable states including a finite number of tapping numbers $TapNum_{reg}$. In many embodiments, a power system may include a combination of continuously controllable actuators (such as certain types of batteries) and discretely controllable actuators (such as described above).

The volt-var optimization objective, for example as defined above, may be subject to a set of passive constraints that may be governed by the physics of power propagation in the network, as well as active constraints for controlling voltage. The power distribution system may be represented as a radial graph $(N, \xi)$, where $N$ is the set of nodes or buses and $\xi$ is the set of edges defined by lines, transformers and voltage regulators. Denoting node $i$ as $j$'s parent (radial graph is a tree), the constraints may be defined as:

$$p_j = p_{ij} - R_{ij}\ell_{ij} - \sum_{(j,k)\in\xi} p_{jk} + \sum_{m\in j} p_{bat}^m \qquad (2a)$$

$$q_j = q_{ij} - X_{ij}\ell_{ij} - \sum_{(j,k)\in\xi} q_{jk} + \sum_{n\in j} q_{cap}^n \qquad (2b)$$

$$v_j^2 = \begin{cases} rv_{i,}^2 & \text{if } (i,j) \text{ is } reg \\ v_i^2 - 2(R_{ij}p_{ij} + X_{ij}q_{ij}) + (R_{ij}^2 + X_{ij}^2)\ell_{ij,} & \text{otherwise} \end{cases} \qquad (2c)$$

$$\ell_{ij} = (p_{ij}^2 + q_{ij}^2)/v_i^2 \qquad (2d)$$

$$P_{bat}, TapNum_{reg}, Status_{cap} \in \boldsymbol{S} \qquad (2e)$$

In the above equations, $p$, $q$ denote active and reactive power consumed at buses (nodes) or power flow over lines (edges), $v$, $\ell$ denote nodal voltage magnitude and squared current magnitude, and $R$, $X$ denote resistance and reactance. All $\{P_{bat}, TapNum_{reg}, Status_{cap}\}$ need to be operating under their operational constraints captured by a set $\boldsymbol{S}$. The top portion of equation (2c) defines an active constraint while the remaining constraint equations define passive constraints. Note that the volt-var control problem is a time-dependent problem, but for brevity, time $t$ has been omitted in all the variables. The constraints in equations (2a) to (2e) include quadratic equalities, making any optimization upon it non-convex.

State-of-the-art methods have leveraged optimization solvers to solve the OPF problem for volt-var control. However, as seen above, due to the nature of an OPF problem, the resulting optimization problem may be non-convex and thus hard to solve. Together with many integer decision variables in controllable devices, the volt-var control problem can become extremely hard to scale to a system with thousands of buses, which is a typical size for power distribution systems.

The disclosed methodology attempts to solve the volt-var control problem by leveraging a control policy trained using reinforcement learning (RL). It is recognized that a power distribution system has no memory and the system's transition into the next state may be solely dependent on the control action and current state. Hence, according to the disclosed methodology, the volt-var control problem can be cast as a Markov Decision Process and solved using RL, where the volt-var optimization objective (e.g., see equation (1)) may be used to define the reward function in the RL framework.

The RL formulation can naturally satisfy the physical constraints of power flow in the distribution network, thus addressing at least some of the technical challenges of the OPF problem. However, the integer constraints of the controllable devices or actuators remain challenging, that can limit the application of state-of-the-art RL-based controllers only to small-scale power distribution systems.

Recent breakthroughs in RL have shown promising results in applications involving continuous control, such as in gaming, robotics, autonomous driving, among others. However, in a power distribution system, the decision variables for controlling the various actuators are often represented by integers (e.g., tapping number of voltage regulator, discharge power of battery, switching status of capacitor). Because integer variables are not readily differentiable, they can raise an issue with certain types of RL policies that are based on computing gradients over control actions, such as policies based on deep deterministic policy gradient (DDPG) or soft actor-critic (SAC) methods. While alternative methods exist that can obviate the integer action problem, most notably methods using REINFORCE estimators, they tend to have high variance, which can make them unsuitable for large-scale power distribution systems.

According to the disclosed methodology, the above problem can be addressed by leveraging reparameterization methods for discrete random variables (e.g., Gumbel-Softmax estimators), and combining them with straight-through estimators that can represent a discrete random variable in the forward pass (of a neural network) and maintain differentiability in the backward pass. Since integer variables admit a discrete structure, such a reparameterization technique using straight-through estimators can be adopted for the above-described integer action constraint in the volt-var control problem.

Furthermore, the disclosed methodology leverages a key insight that integer variables are fundamentally different from discrete or "categorical" variables. In general, integer variables are comparable while discrete variables are not. For example, the elements in the integer set {1, 2, 3} are comparable because 1 < 2 < 3, while the discrete set {dog, cat, frog} cannot assign such a relationship. Typically, a one-hot encoding is employed for representing a discrete sample due to its incomparability. An integer set has comparability, because of which an integer sample can be represented by an integer quantity instead of a one-hot vector. In light of this fact, the disclosed methodology employs a linear mapping from a discretized vector representation (e.g., a one-hot encoding) of categorical predicted actions defined by switchable states of an actuator, created using the straight-through estimator, to an integer action for the actuator.

The mapped integer action derived using the straight-through estimator can be random and differentiable with respect to learnable parameters of the policy. Furthermore, with the integer mapping, the effective dimension of the action space of the actuator can be essentially equal to one and independent of the fineness of discretization. With the differentiability and the effective dimension of the action space, the disclosed methodology may be readily compatible with continuous action-based RL methods such as DDPG and SAC, which have low variances and are hence scalable to large power distribution systems.

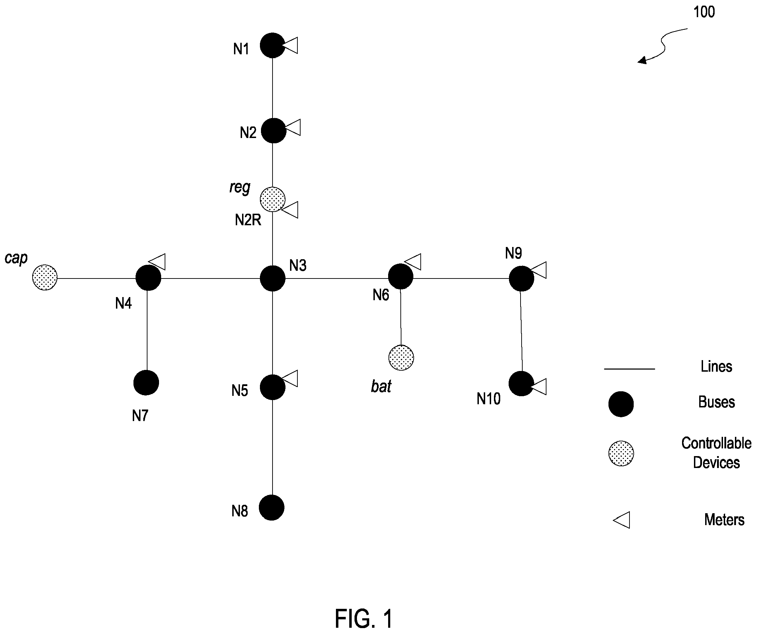

Turning now to the disclosed embodiments, FIG. 1 illustrates a topology of a power distribution system 100. The shown power distribution system 100 is merely illustrative. The disclosed methodology can be scaled to large distribution systems having a large number (e.g., thousands) of buses. The shown power distribution system 100 includes 10 buses that define nodes N1, N2, N3, N4, N5, N6, N7, N8, N9, N10 connected by power lines and arranged in a radial topology having a root node (source bus) N1. The shown power distribution system 100 further includes a number of controllable grid assets or actuators associated with at least some of the nodes. These actuators include a capacitor (*cap*) connected to node N4, a battery (*bat*) connected to node N6 and a voltage regulator (*reg*) defining an edge between nodes N2 and N3. Here, the output side of the voltage regulator (*reg*) is represented as a special node N2R. For the purpose of this description, the voltage regulator (*reg*) may be considered to be associated with the node N2R.

The power distribution system 100 may include measurement devices or meters associated with at least some of the nodes for acquiring observations pertaining to the respective nodes. These nodes are referred to as "measured nodes." The meters can include, for example, smart metering infrastructure (SMI) devices, among others. The power distribution system 100 may also include one or multiple "unmeasured nodes" from which measurement signals are missing, for example, due to failure or unavailability of meters (e.g., nodes N3, N7 and N8).

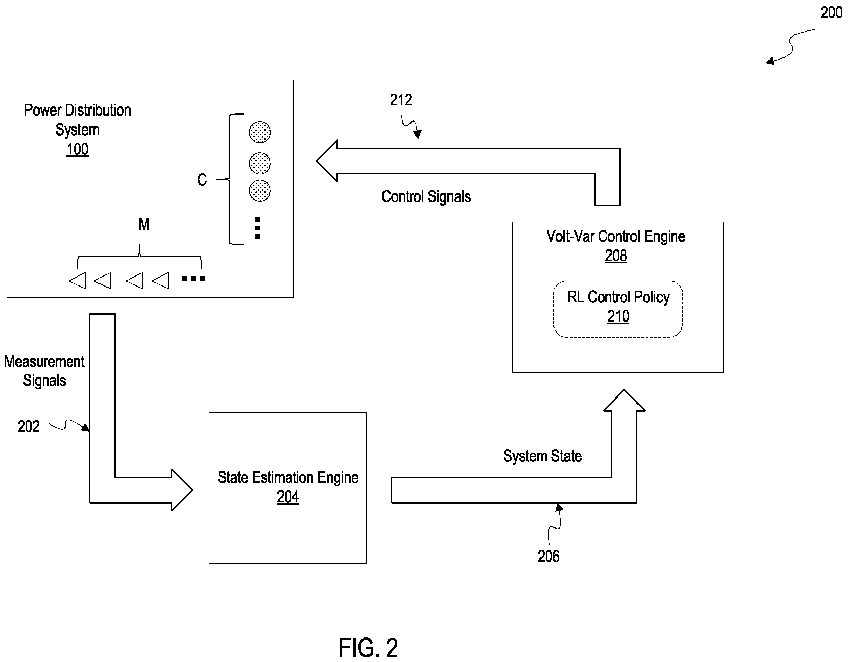

FIG. 2 illustrates an example embodiment of a system 200 for controlling voltage and reactive power flow in a power distribution system 100 using reinforcement learning. The various engines described herein, including the state estimation engine 204 and the volt-var control engine 208, including components thereof, may be implemented by a computing system in various ways, for example, as hardware and programming. The computing system may, for example, be part of a grid control system. The programming for the engines 204, 208 may take the form of processor-executable instructions stored on non-transitory machine-readable storage mediums and the hardware for the engines may include processors to execute those instructions. The processing capability of the systems, devices, and engines described herein, including the state estimation engine 204 and the volt-var control engine 208 may be distributed among multiple system components, such as among multiple processors and memories, optionally including multiple distributed processing systems or cloud/network elements.

Referring to FIG. 2, measurement signals 202 associated with respective nodes of the power distribution system 100 may be communicated via meters M, such as SMIs (e.g., as shown in FIG. 1). A state estimation engine 204 may be used to generate a system state 206 of the power distribution system 100 based on observations acquired via the measurement signals 202. The observations may be used, for example, to determine nodal features 214 of respective nodes. The nodal features may be indicative of a measured electrical quantity (such as voltage and/or power) and a status of actuators associated with the respective node.

The nodal features may be assigned to every node of the power distribution system 100. According to disclosed embodiments, the nodal features may include the nodal voltage as well as capacitor, voltage regulator and battery status. Computationally, the nodal features for each node may be represented as a corresponding node vector. Nodes that do not have capacitors, voltage regulators or batteries may be padded with zeros indicative of "absent" status in the corresponding entries in the node vector. The measurement signals 202 may typically comprise time series data. The nodal features of each node may represent a snapshot or instantaneous data samples from the time series data acquired from that node. In many embodiments, the power distribution system 100 may include unmeasured nodes from which measurement signals are missing, for example, due to failure or unavailability of meters. In this scenario, the nodal features of the unmeasured nodes may consist of "zeros" in corresponding fields.

The nodal features may define an observation space which is a product of discrete and continuous variables. The discrete variables may be from the physical constraints of the actuators. For example, a capacitor may be operable only in an ON or an OFF state; a voltage regulator may be operable in a finite number of modes or tapping numbers (typical example is 33 tapping numbers); a discrete battery may be operable in a finite number of discharge powers. The continuous variables may include, for example, the measured nodal voltage/ power, state-of-charge or discharge power of a continuous battery, etc.

According to a disclosed embodiment, the system state 206 may be defined by concatenating the nodal features of the nodes of the power distribution system 100 into a vectorized state representation. In another embodiment, the system state may be defined by a graph representation using the nodal features and topological information of the power distribution system 100, for example, as disclosed in the European Patent Application No. 22187695.6.

The system state 206 may be sent as input to a volt-var control engine 208. The volt-var control engine 208 may process the system state 206 using a reinforcement learned control policy 210 comprising a deep learning model (such as a neural network) to output a control action for effecting a change of status of one or multiple actuators, to regulate voltage and reactive power flow in the power distribution system 100 based on the defined volt-var optimization objective. According to disclosed embodiments, at least some of the actuators of the power distribution system 100 may include discretely controllable actuators operable in discrete switchable states. The control action may include a combination of integer actions for the discretely controllable actuators.

Based on the control action output by the RL control policy 210, the volt-var control engine 208 may communicate control signals 212 to respective actuators C of the power distribution system 100 (e.g., as shown in FIG. 1) to effect a change of status thereof, whereby the power distribution system 100 may transition to a new system state. Volt-var control of the power distribution system 100 may thus be implemented by continuously executing the above-described process over a sequence of time steps (e.g., every 1 hour) where the system state of the power distribution system 100 may be transformed after the control action at each step.

The control policy 210 may be trained via a process of reinforcement learning. The process can include, over a sequence of steps of trial, optimizing learnable parameters (e.g., weights) of the deep learning model of the control policy 210 to maximize a cumulative reward resulting from a sequence of control actions, based on a reward function r defined by a volt-var objective. The reward function r may depend on a current system state $s_t$, the action $a_t$ taken in the current step and the next system state $s_{t+1}$. According to disclosed embodiments, the reward function r may be defined by:

$$r = -(r_v + r_c + r_p) \qquad (3)$$

In equation (3), $r_v$ denotes the penalty or cost for voltage violation at nodes, $r_c$ denotes the penalty or cost for control error due to frequently changing the status of actuators and $r_p$ denotes the penalty or cost for power losses. The penalty terms in equation (3) map back to the costs in the volt-var optimization objective in equation (1). The terms $r_v$ and $r_c$ may be conflicting in practice. Minimizing the voltage violation $r_v$ may require frequent operation of voltage regulators, capacitors, and batteries, which would subsequently increase the control error penalty $r_c$, and vice versa. This may result in a multi-objective RL scenario. The reward function may include weights associated with the penalty terms. According to disclosed embodiments, the weights (e.g., $w_{cap}$, $w_{reg}$, $w_{bat}$, $w_{soc}$ and $w_{power}$) may be built into individual penalty terms, as described below.

The penalty $r_v$ for voltage violation may be determined, for example, as a sum of worst-case voltage violations among all phases across all nodes of the power distribution system. The upper/lower voltage violation thresholds ($\overline{V}/\underline{V}$) may be set as $\pm$ 5% of the nominal voltage $V$. The penalty $r_v$ may be thus determined as:

$$r_v = \sum_{n \in N} (\max_{p \in Phases(n)} V_{n,p}(s_{t+1}) - \overline{V}) + (\underline{V} - \min_{p \in Phases(n)} V_{n,p}(s_{t+1}))_+ \qquad (4)$$

In equation (4), $(\cdot)_+$ is a shorthand for max($\cdot$, 0). Thereby, the upper violation ($max_p\ V_{n,p} - \overline{V}$) is positive when $max_p\ V_{n,p} > \overline{V}$ and zero otherwise.

The penalty $r_c$ for control error may be determined, for example, as a sum of the capacitors' and regulators' switching penalties (1st & 2nd rows of equation (5) respectively) and batteries' discharge penalty and state-of-charge (soc) penalty (3rd row of equation (5)). The penalty $r_c$ can discourage the control policy from making frequent changes and slow the actuators from wear out. The penalty $r_c$ may be thus determined as:

$$r_c = \sum_{c \in caps} \text{w}_{\text{cap}} \left| \text{Status}_{cap}(s) - \text{Status}_{cap}(s_{t+1}) \right| +$$
$$\sum_{r \in regs} \text{w}_{\text{reg}} \left| \text{TapNum}_{reg}(s) - \text{TapNum}_{reg}(s_{t+1}) \right| +$$
$$\sum_{b \in bats} \text{w}_{\text{dis}} \frac{\text{P}_{\text{bat}}(s_{t+1})_+}{\overline{\text{P}_{\text{bat}}}} + \text{w}_{\text{soc}} I_{i=T} \left| \text{soc}_{\text{bat}}(s_{t+1}) - \text{soc0}_{bat} \right| \quad (5)$$

In equation (5), $\frac{\text{P}_{\text{bat}}(s_{t+1})_+}{\overline{\text{P}_{\text{bat}}}}$ represents a discharge error with $\overline{\text{P}_{\text{bat}}}$ being the max power and having a $(\cdot)_+$ function as the battery degradation is primarily caused by the battery discharging power $\text{P}_{\text{bat}} > 0$. Besides, the soc penalty has an indicator of the last time step $I_{i=T}$ to encourage the battery to return to its initial state-of-charge $\text{soc0}_{bat}$. Hence, the reward is stationary if $\text{w}_{\text{soc}} = 0$ and non-stationary otherwise.

The penalty $r_p$ for power losses may be determined, for example, as a ratio of the overall power loss to the total power, given by:

$$r_p = \text{w}_{\text{power}} \frac{\text{PowerLoss}(s_{t+1})}{\text{TotalPower}(s_{t+1})} \quad (6)$$

According to disclosed embodiments, the volt-var control may be cast as an infinite-horizon MDP, with the objective of the RL being to determine an optimal control policy $\pi$ that maximizes a cumulative reward or "return", as given by:

$$\max_{\pi} J(\pi) = \max_{\pi} E\left[ \sum_{t=0}^{\infty} \gamma^t r(s_t, a_t,) \right] \quad (7)$$

In equation (7), $E$ denotes an expectation, $t$ denotes a time step, $\gamma$ denotes a discount factor, where $\gamma \in (0,1)$, and $r$ denotes the reward function, for example, as defined by equations (3) to (6).

The control policy $\pi$ may be parameterized by learnable parameters $\theta$, as $\pi_\theta$. A typical way to optimize equation (7) by tuning over $\theta$ may involve using a policy gradient which may depend on the Q function under $\pi_\theta$, which may be defined as:

$$Q^{\pi_\theta}(s, a) = E\left[ \sum_{t=0}^{\infty} \gamma^t r(s_t, a_t,) \middle| s_0 = s, a_0 = a, a_t \sim \pi(.|s_t) \right] \quad (8)$$

In equation (8), $Q^{\pi_\theta}(s, a)$ denotes a Q function (also referred to as action-value function), which gives the expected return if a controller starts at system state $s$, takes an arbitrary action $a$, and then forever acts according to the policy $\pi_\theta$.

In some embodiments with entropy-regularized RL, such as in a soft actor-critic method, an agent may be assigned a bonus reward at each time step t proportional to the entropy of the control policy $\pi_\theta$ at that time step $t$. In these embodiments, the entropy bonus may be summed up with the volt-var control objective-based reward function $r$ in equation (7). Correspondingly, the Q function $Q^{\pi_\theta}(s, a)$ in equation (8) may also be changed to include entropy bonuses from every time step except the first.

With $Q^{\pi_\theta}$ defined as described above, the policy gradient may be computed using:

$$\nabla_\theta J(\pi_\theta) = E_{s \sim \rho^\pi, a \sim \pi_\theta} \left[ (\nabla_\theta \ln \pi_\theta(a|s)) Q^{\pi_\theta}(s, a) \right] \quad (9)$$

In equation (9), $\rho^\pi$ denotes an unnormalized discounted state distribution.

Since the expectation of equation (9) may not be easily computable, gradient estimation may become an important problem. Especially, since integer variables of the actions of the discreetly controllable actuators of the power distribution system are not readily differentiable, they can raise an issue in computing a policy gradient for tuning the learnable parameters $\theta$ of the control policy $\pi_\theta$. The above-described challenge may be addressed by the disclosed methodology of integer reparameterization.

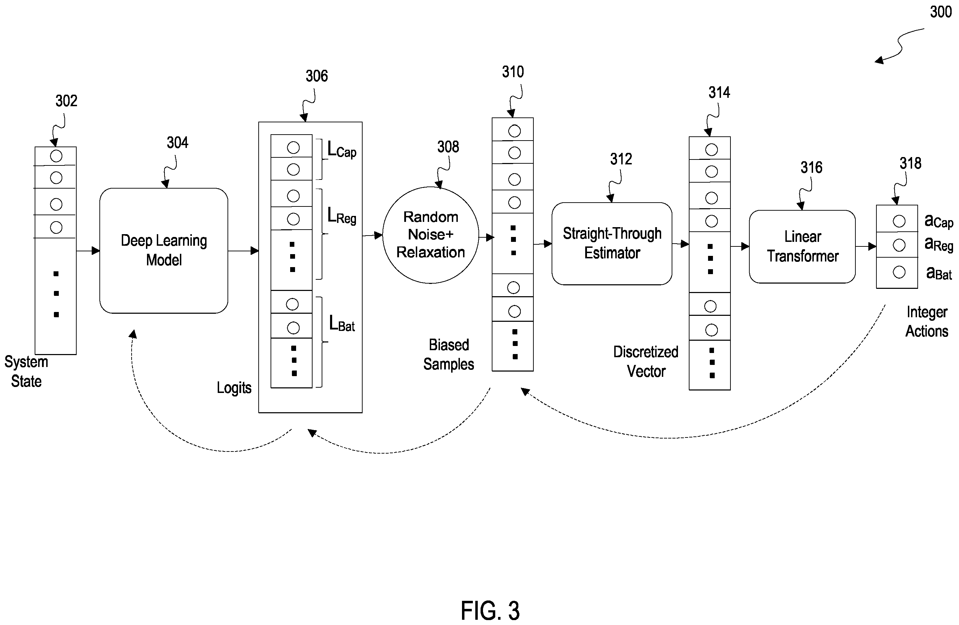

FIG. 3 schematically illustrates a control policy 300 incorporating integer reparameterization, according to an example embodiment. As shown, the control policy 300 may include a deep learning model 304, typically including a neural network. The deep learning model 304 may be parametrized by learnable parameters, which may include, for example, weights and biases of the neural network. The learnable parameters of the deep learning model 304 may be optimized using a reinforcement learning process as described below, for training the control policy 300 for volt-var control of the power distribution system 100. The training may be executed, for example, using known RL algorithms, such as SAC, DDPG, among others, and implemented on hardware comprising, for example, a server including a high-end processor such as a graphics processing unit (GPU), among others.

According to disclosed embodiments, the training process may be implemented on a simulation environment using a simulation model of the power distribution system 100. Thus, the "system state" in the training process may refer to a simulated system state. The trained (and tested) control policy 300 may be subsequently deployed to a runtime system that can include a volt-var control engine for regulating voltage and reactive power flow in the physical power distribution system 100, as described in FIG. 2.

Referring to FIG. 3, the training process may be executed over a sequence of time steps in an infinite horizon MDP. At each time step, a system state 302 may be generated based on observations acquired by reading state signals from the simulation environment. To begin the training process, the simulation environment may be initialized to return an initial observation. The initialization may comprise reading a load profile into the simulation model and setting initial statuses of the actuators. For example, the capacitors, regulators, and batteries may be initialized with the status "ON", "full tap number" and full charge with zero discharge power respectively.

As described above, according to disclosed embodiments, the system state 302 may comprise a vector including a concatenation of nodal features of nodes of the power distribution system. The nodal features may include a measured electrical quantity (such as nodal voltage and/or power) and a status of actuators associated with the node. In another embodiment, the system state may be defined by a graph representation using the nodal features and topological information of the power distribution system 100, for example, as disclosed in the European Patent Application No. 22187695.6.

The system state 302 may be provided as an input to the deep learning model 304. The deep learning model 304 may use the learnable parameters to compute logits 306 for a categorical distribution of predicted actions from the system state 302. In this case, the predicted actions may define switchable states of the discretely controllable actuators. In the illustration shown in FIG. 3, the logits 306 include: logits $L_{Cap}$ for predicted actions or switchable states of the capacitor (binary ON/OFF states); logits $L_{Reg}$ for predicted actions or switchable states of the voltage regulator (finite number of tapping numbers); and logits $L_{Bat}$ for predicted actions or switchable states of the battery (finite number of discharge powers). In this example, only three actuators were considered. In general, the logits 306 may define a vector having a dimensionality equal to the sum of the switchable states of all of the actuators of the power distribution system.

The term "logits" as used in this description, generally refers to a prediction or output of the deep learning model, such as defined by a final or output layer of a neural network. The logits may define a vector having a dimensionality as described above. According to the example embodiment disclosed herein, the logits 306 may define an unnormalized log probability vector.

The logits 306 generated by the deep learning model 304 based on the system state 302 may be processed using the disclosed integer reparameterization methodology to output a control action 318 that includes integer actions for the discretely controllable actuators. According to the disclosed methodology, for each discretely controllable actuator, the respective logits 306 may be used to create a discretized vector representation 314 of the predicted actions (of that actuator) using a straight-through estimator 312. A "straight-through estimator" refers to a computational unit that can use a non-differentiable threshold function in a forward pass (in this case, to compute the integer actions), and replace the non-differentiable function with a differentiable function in a backward pass or backpropagation (in this case, to compute a policy gradient). The discretized vector representation 314 of the predicted actions may be reduced to an integer action for the respective discretely controllable actuator using a linear transformer 316. An example implementation of the disclosed integer reparameterization methodology is described below.

Continuing with reference to FIG. 3, the respective logits 306 from the deep learning model 304 may be reparametrized by a computational unit 308 that involves perturbation of the logits 306 using a random noise and introducing a relaxation to create biased samples 310. The biased samples 310 may represent differentiable approximations of samples of the categorical distribution of the predicted actions. According to disclosed embodiments, the computational unit 308 may be implemented using a Gumbel-Softmax estimator, that can add random noise from a Gumbel distribution and use a Softmax function to provide differentiability by introducing a relaxation.

For each actuator, the biased samples 310 created using a Gumbel-Softmax estimator may be represented by a vector $D_{GS}$ having a dimension $n$ equal to the number of discretely switchable states (predicted actions) of that actuator, where:

$$D_{GS}[i] = \text{Softmax} \left( \text{logit}_{\theta_i} + g_i \right) \qquad (10)$$

In equation (10), $D_{GS}[i]$ is the $i^{th}$ sample of the vector $D_{GS}$ corresponding to the $i^{th}$ predicted action for the actuator, $\text{logit}_{\theta_i}$ is the logit (in this case, an unnormalized log probability) of the $i^{th}$ predicted action computed using the learnable parameters $\theta$, and $g_i$ is an i.i.d. random sample from a Gumbel (0,1) distribution.

While the biased samples 310 may be differentiable, they may not be identical to the samples from the corresponding categorical distribution. The straight-through estimator 312 can address this issue by creating a discretized vector representation 314 (such as a one-hot vector encoding) of the categorical samples by correcting the bias in the forward pass, and using the differentiable biased samples 310 in the backward pass. In the context of the disclosed embodiment, the straight-through estimator may include a straight-through Gumbel-Softmax (STGS) estimator. According to disclosed embodiments, the STGS estimator 312 may correct the bias in the forward pass by introducing a constant shift of $D_{GS}$, as given by:

$$D_{STGS} = D_{hot} - [D_{GS}]_{\text{const}} + D_{GS} \qquad (11)$$

where $D_{hot}$ is a one-hot vector encoding of the biased samples, given by:

$$D_{hot} = \text{one\_hot} \left( \arg\max_{i} \left( \text{logit}_{\theta_i} + g_i \right) \right) \qquad (12)$$

In equation (11), $[D_{GS}]_{\text{const}}$ treats $D_{GS}$ as a constant by detaching dependency on $\theta$ during backpropagation (backward pass) of the neural network. Thus, in the backward pass, both $D_{hot}$ and $[D_{GS}]_{\text{const}}$ are constants for which the derivatives with respect to the learnable parameters $\theta$ is zero. In this manner, $D_{STGS}$ is a one-hot vector 314 in the forward pass and a differentiable approximation 310 in the backward pass of the neural network. In FIG. 3, the information flow during backpropagation is illustrated by dashed arrows.

The learnable parameters $\theta$ may be updated by computing a policy loss based on the control action 318. The policy loss may be determined dependent on evaluation of a reward function (e.g., using equations (3) to (6)). The learnable parameters $\theta$ may be updated by computing a gradient of the policy loss. Using the STGS estimator 312, the policy loss may be defined by a differentiable objective function $f$, where the policy gradient may be computed by estimating the gradient under $D_{STGS}$ as:

$$\nabla_\theta f(D_{STGS}) = \left[ \frac{\partial f(D_{STGS})}{\partial \theta_j} \right]_j \qquad (13)$$

In equation (13), $\theta_j$ denotes the $j^{th}$ element of the learnable parameters $\theta$.

The above-described STGS estimator 312 may provide lower variance, prevent error in the forward pass and maintain sparsity. Although the STGS estimator 312 can provide a good reparameterization for discrete random variables, directly using the discretized vector representation 314 from the STGS estimator 312 to represent integer actions may result in high dimensionality, particularly in case of a large-scale power distribution system.

Integer decision variables usually appear in industrial settings, such as in power distribution systems, that involve many integer-only or binary actions. Despite the discreteness, integer variables share one thing in common with continuous variables, namely comparability, or more mathematically, the ability to form a totally ordered set. This is the key that makes integer variables distinct from discrete counterparts, which allows integer variables to be treated like continuous instead of discrete/categorical variables. The proposed integer reparameterization is based on the insight that, since integer actions do not necessarily require a one-hot encoding, once being generated, they may be treated like a continuous action in a subsequent computation. This can greatly reduce the computational overhead and can be a key in adapting continuous action-based RL algorithms, such as SAC and DDPG, for integer actions.

According to disclosed embodiments, the control policy 300 may further include a computational unit 316 that applies a linear transformation for each discretely controllable actuator, to reduce the discretized vector representation 314 to a respective integer action for that actuator. Recall that the STGS estimator 312 (see equation (11)) generates a differentiable one-hot random vector $D_{STGS}$. Then $\underset{i}{\arg\max}\, D_{STGS}[i]$, the index/argument of 1 in $D_{STGS}$, is an integer random variable following the distribution formed by Softmax(logit$_{\theta_i}$.). Thereby, once establishing a differentiable mapping from $D_{STGS}$ to $\underset{i}{\arg\max}\, D_{STGS}[i]$, it is possible to have a differentiable random integer parameterized by $\theta$. According to disclosed embodiments, such a differentiable mapping may be constructed using a linear map, as given by:

$$\mathrm{Ind}_\theta = \langle [0,1,\dots,n-1], D_{STGS} \rangle \qquad (14)$$

In equation (14), $\langle .,. \rangle$ denotes an inner product and $D_{STGS}$ is assumed to be $n$-dimensional. The linear transformation according to equation (14) thus results in a random integer $\mathrm{Ind}_\theta$ parameterized by $\theta$, whose value equals

$$\underset{i\in[0,\dots,n-1]}{\arg\max}\, D_{STGS}[i].$$

Still referring to FIG. 3, the control action 318 output by linear transformer 316 may include one-dimensional integer actions for each discretely controllable actuator. In the illustrated example, the integer actions include $a_{cap}$, $a_{Reg}$ and $a_{Bat}$ for the capacitor, voltage regulator and the battery respectively. It will be appreciated that although not shown in the illustrated example, a power distribution system may include one or more continuously controllable actuators, in addition to the discretely controllable actuators. Determination of continuous actions is not a subject of the present disclosure but can be used in conjunction with the disclosed methodology to generate control actions 318 that may include a combination of continuous and integer actions.

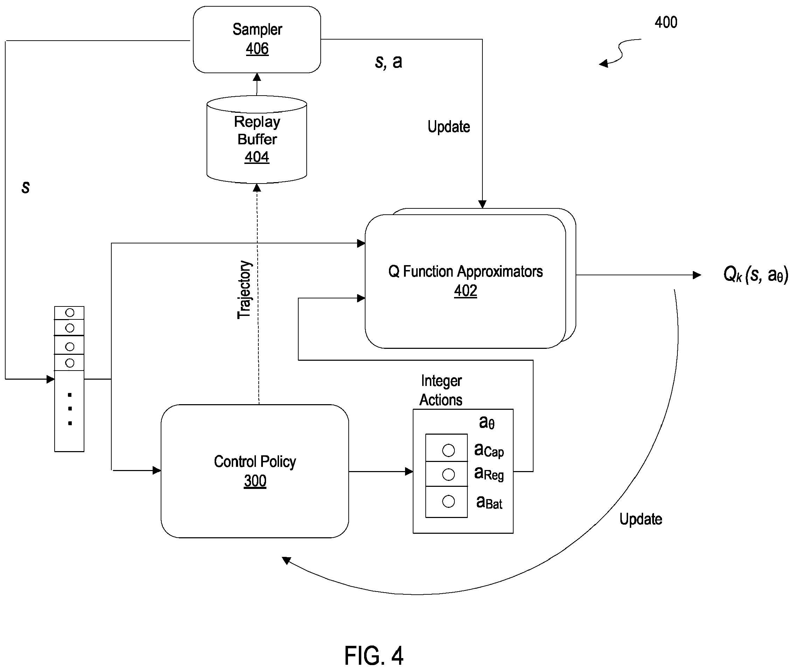

FIG. 4 schematically illustrates a soft actor-critic (SAC) architecture 400 according to an example embodiment. SAC is a type of off-policy actor-critic method based on a replay buffer (collection of historical trajectories) that involves a policy, referred to as "actor", and one or more Q function approximators, referred to as "critics". As stated above, the Q function in the SAC method may be regularized by an entropy bonus added to the reward function. The SAC method, as currently known, is suited to continuous action-based control policies. The disclosed embodiments can enable the SAC method to be applied for integer actions, making it suitable for controlling a large-scale power distribution system.

For a basic understanding of the SAC method, the reader is directed to the publication: Tuomas Haarnoja, Aurick Zhou, Pieter Abbeel, and Sergey Levine. Soft actor-critic: Off-policy maximum entropy deep reinforcement learning with a stochastic actor. In International conference on machine learning, pages 1861-1870. PMLR, 2018. The state-of-the-art also includes a number of variants of the above-mentioned approach.

Referring now to FIG. 4, the SAC architecture 400 may include the above-described control policy 300, parameterized by $\theta$, and one or more (in this case, two) Q function approximators 402, parameterized by $\varphi_k$, $k \in [1,2]$. The control policy 300 and the Q function approximators 402 may comprise separate neural networks. The method may involve using the control policy ($\pi_\theta$) 300 to generate a sequence of state actions pairs ($s_t$, $a_t$) over a known horizon using the simulation environment to define a trajectory, which may be stored in a replay buffer 404. Having created the replay buffer 406, the learnable parameters of the control policy 300 and the Q function approximators 402 may be updated over a sequence of update steps by sampling, at each update step, a batch of state-action transitions from the replay buffer 404.

The learnable parameters $\varphi_k$ of the Q function approximators 402 may be updated using sampled state-action pairs ($s, a$) by regressing to a single shared target determined based on evaluation of the reward function (e.g., using equations (3) to (6)), for example via minimization of a mean-squared Bellman error (MSBE) loss function, as known in the art.

The learnable parameters $\theta$ of the control policy 300 may be updated in the following manner. The control policy 300 may receive, as input, a sampled system state $s$, and use its learnable parameters $\theta$ to output a control action $a_\theta$, which may include integer actions for each discretely controllable actuator, as described above. Each Q function approximator 402 may receive, as input the sampled system state s and the control action $a_\theta$ and use its learnable parameters $\varphi_k$ to respectively determine a scalar $Q_k$ ($s$, $a_\theta$). The learnable parameters $\theta$ of the control policy 300 may be updated based on minimization of a policy loss, which may be defined as a function of $\underset{k\in[1,2]}{\min}\, Q_k\,(s, a_\theta)$ averaged

over the batch, for example, as a negative of the averaged $\min_{k \in [1,2]} Q_k(s, a_\theta)$. The policy loss may be minimized by backpropagating the differentiable approximation $D_{STGS}$ for $a_\theta$ to estimate a gradient of the policy loss at each step, for example, using equation (13).

Since each integer action $a_\theta$ is of effective dimension 1 (in a Euclidean space), the action dimension may be precisely equal to the number of integer action variables. Thereby, the input/output dimension of the control policy 300 and the Q function approximators 402 can be the same as their continuous action counterparts. The only difference may lie in the policy design, where the output is restricted to have an integer structure as described above, while the continuous action version does not have such a restriction.

Subsequent to the training process, the control policy 300 may be deployed to a runtime system as a reinforcement learned control policy for implementing volt-var control on a physical power distribution system, such as the RL control policy 210 shown in FIG. 2. Referring again to FIG. 2, the control policy 210 may process a system state 206 to output a control action that includes respective integer actions for the discretely controllable actuators. The integer actions may be determined in the following way. First, the control policy 210 may use the learned parameters of its deep learning model to compute logits for a categorical distribution of predicted actions from the system state 206, wherein the predicted actions define switchable states of the discretely controllable actuators. The control policy 210 may then process the logits to reduce the categorical distribution of predicted actions for each discretely controllable actuator to an integer action for that actuator.

Consistent with disclosed embodiments, the logits from the deep learning model may be processed by creating, for each discretely controllable actuator, a discretized vector representation of the predicted actions based on the respective logits. As described above, the discretized vector representation may be created by perturbing the logits with a random noise to create biased samples (e.g., using a Gumbel-Softmax estimator as defined in equation (10)), and computing a one-hot vector encoding of the biased samples (e.g., using equation (12)). An integer action for the respective actuator may then be determined from the discretized vector representation of the predicted actions using a linear transformation (e.g., using equation (14))

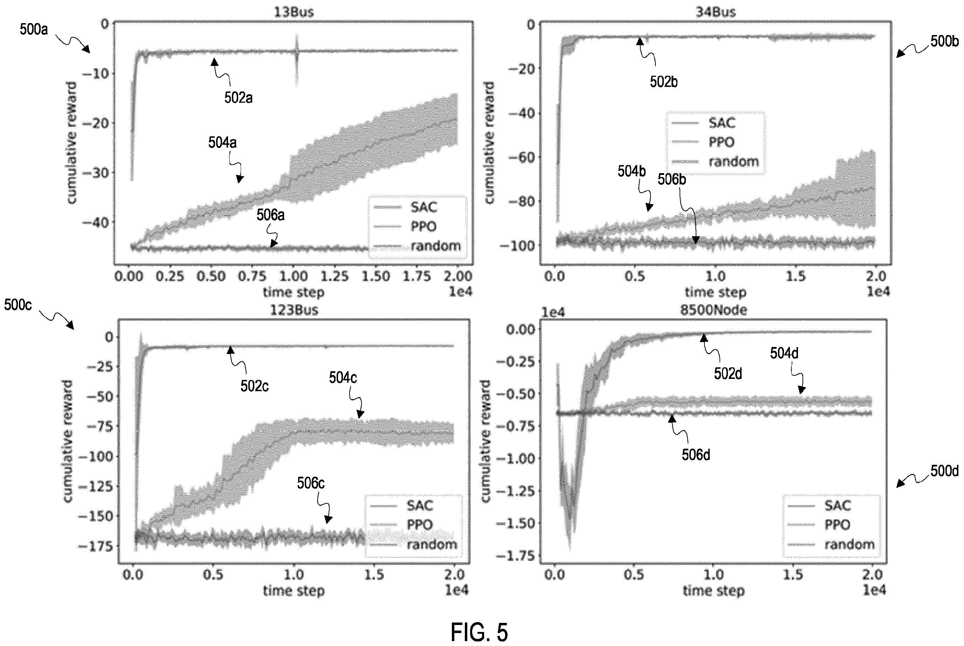

For validation of the disclosed methodology, a volt-var control policy was trained using a SAC algorithm based on the disclosed embodiments on four different power distribution system environments and compared to a volt-var control policy trained using a proximal policy optimization (PPO) algorithm without reparameterization. The experimental results are shown in FIG. 5.

FIG. 5 shows graphs 500a, 500b, 500c and 500d that plot cumulative reward versus time step in each case for four different power distribution system environments respectively, namely: an IEE 13Bus feeder system, an IEEE 34 bus feeder system, an IEEE 123Bus feeder system and an IEEE 8500Node feeder system. The plots 502a, 502b, 502c, 502d respectively denote the performance of the proposed SAC-based control policy in the above-mentioned environments. The plots 504a, 504b, 504c, 504d respectively denote the performance of the PPO-based control policy in the above-mentioned environments. The plots 506a, 506b, 506c, 506d respectively denote the performance of a random control policy in the above-mentioned environments. The PPO-based control policy is based on the REINFORCE estimator which does not need differentiable actions. The random policy is one that takes actions uniformly at random from the action space.

As shown in FIG. 5, the proposed SAC-based control policy can outperform the PPO-based control policy across all environments. In particular, the difference in performance between the two is more pronounced in larger power distribution systems, where the PPO-based control policy may suffer from a high variance. As shown in the graph 500d, for a large-scale power distribution system with 8500 nodes, the PPO-based control policy is almost comparable to a random policy.

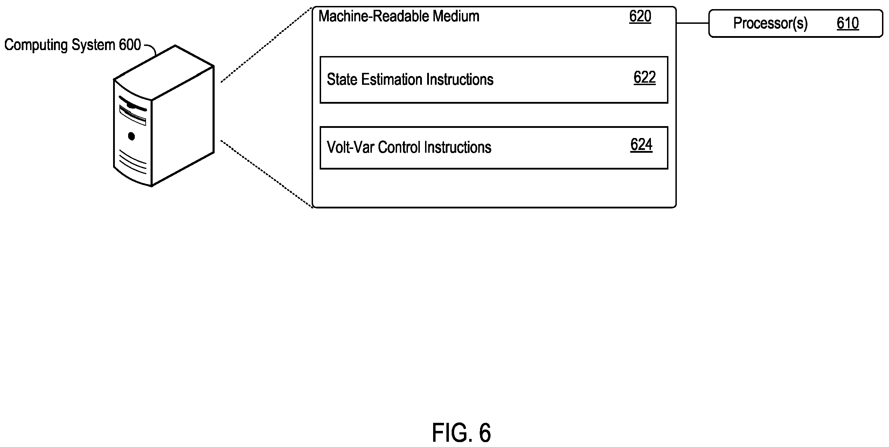

FIG. 6 shows an example of a computing system 600 that can support volt-var control of a power distribution system according to disclosed embodiments. The computing system 600 may, for example, form part of a grid control system. The computing system 600 includes at least one processor 610, which may take the form of a single or multiple processors. The processor(s) 610 may include a central processing unit (CPU), a graphics processing unit (GPU), a neural processing unit (NPU), a microprocessor, or any hardware device suitable for executing instructions stored on a memory comprising a machine-readable medium. The computing system 600 further includes a machine-readable medium 620. The machine-readable medium 620 may take the form of any non-transitory electronic, magnetic, optical, or other physical storage device that stores executable instructions, such as state estimation instructions 622 and volt-var control instructions 624, as shown in FIG. 6. As such, the machine-readable medium 620 may be, for example, Random Access Memory (RAM) such as a dynamic RAM (DRAM), flash memory, spin-transfer torque memory, an Electrically-Erasable Programmable Read-Only Memory (EEPROM), a storage drive, an optical disk, and the like.

The computing system 600 may execute instructions stored on the machine-readable medium 620 through the processor(s) 610. Executing the instructions (e.g., the state estimation instructions 622 and the volt-var control instructions 624) may cause the computing system 600 to perform any of the technical features described herein, including according to any of the features of the state estimation engine 204 and the volt-var control engine 208 described above.

The systems, methods, devices, and logic described above, including the state estimation engine 204 and the volt-var control engine 208, may be implemented in many different ways in many different combinations of hardware, logic, circuitry, and executable instructions stored on a machine-readable medium. For example, these engines may include circuitry in a controller, a microprocessor, or an application specific integrated circuit (ASIC), or may be implemented with discrete logic or components, or a combination of other types of analog or digital circuitry, combined on a single integrated circuit or distributed among multiple integrated circuits. A product, such as a computer program product, may include a storage medium and machine-readable instructions stored on the medium, which when executed in an endpoint, computer system, or other device, cause the device to perform operations according to any of the description above, including according to any features of the state estimation engine 204 and the volt-var control engine 208. Computer readable program instructions described herein can be downloaded to respective computing/processing devices from a computer readable storage medium or to an external computer or external storage device via a network, for example, the Internet, a local area network, a wide area network and/or a wireless network.

The processing capability of the systems, devices, and engines described herein, including the state estimation engine 204 and the volt-var control engine 208, may be distributed among multiple system components, such as among multiple processors and memories, optionally including multiple distributed processing systems or cloud/network elements. Parameters, databases, and other data structures may be separately stored and managed, may be incorporated into a single memory or database, may be logically and physically organized in many different ways, and may be implemented in many ways, including data structures such as linked lists, hash tables, or implicit storage mechanisms. Programs may be parts (e.g., subroutines) of a single program, separate programs, distributed across several memories and processors, or implemented in many different ways, such as in a library (e.g., a shared library).

Although this disclosure has been described with reference to particular embodiments, it is to be understood that the embodiments and variations shown and described herein are for illustration purposes only. Modifications to the current design may be implemented by those skilled in the art, without departing from the scope of the patent claims.

**Claims**

1. A method for controlling a power distribution system comprising a number of controllable devices, wherein at least some of the controllable devices are discretely controllable devices operable in discrete switchable states, the method comprising:

   acquiring observations via measurement signals communicated by a plurality of meters in the power distribution system to define a system state, and
   processing the system state using a reinforcement learned volt-var control policy comprising a deep learning model to output a control action that includes respective integer actions for the discretely controllable devices, wherein the integer actions are determined by:

      using learned parameters of the deep learning model to compute logits for a categorical distribution of predicted actions from the system state, wherein the predicted actions define switchable states of the discretely controllable devices, and
      processing the logits to reduce the categorical distribution of predicted actions for each discretely controllable device to an integer action for that discretely controllable device, and

   communicating the control action to the controllable devices for effecting a change of state of one or more of the controllable devices, to regulate voltage and reactive power flow in the power distribution system.

2. The method according to claim 1, wherein the discretely controllable devices comprise a combination of controllable devices selected from: one or more voltage regulators, one or more capacitors and one or more batteries.

3. The method according to any of claims 1 and 2, wherein the system state is defined by nodal features of respective nodes of the power distribution system, the nodal features including a measured electrical quantity and a status of controllable devices associated with the respective nodes.

4. The method according to any of claims 1 to 3, wherein the processing of the logits comprises:

   for each discretely controllable device, creating a discretized vector representation of the predicted actions based on the respective logits, and
determining the integer action for the respective discretely controllable device from the discretized vector representation of the predicted actions using a linear transformation.

5. The method according to claim 4, wherein the discretized vector representation is created by:

perturbing the logits with a random noise to create biased samples that represent differentiable approximations of samples of the categorical distribution of the predicted actions, and
computing a one-hot vector encoding of the biased samples.

6. The method according to claim 5, wherein the biased samples are created using a Gumbel-Softmax estimator.

7. The method according to any of claims 5 and 6, wherein the linear transformation comprises an inner product of the one-hot vector and the vector $[0,1, ... n - 1]$, where $n$ denotes a dimensionality of the one-hot vector defined by the number of switchable states of the respective discretely controllable device.

8. A computer-implemented method for training a control policy for volt-var control of a power distribution system using reinforcement learning in a simulation environment, the power distribution system comprising a number of controllable devices, wherein at least some of the controllable devices are discretely controllable devices operable in discrete switchable states, the method comprising:

acquiring observations by reading state signals from the simulation environment to define a system state of the power distribution system,
processing the system state using the control policy to output a control action that includes respective integer actions for the discretely controllable devices, wherein the control policy comprises a deep learning model and wherein the integer actions are determined by:

using learnable parameters of the deep learning model to compute logits for a categorical distribution of predicted actions from the system state, wherein the predicted actions define switchable states of the discretely controllable devices,
for each discretely controllable device, creating a discretized vector representation of the predicted actions based on the respective logits using a straight-through estimator, and
reducing the discretized vector representation of the predicted actions to an integer action for the respective discretely controllable device using a linear transformation, and

updating the learnable parameters of the control policy by computing a policy loss based on the control action, the policy loss being dependent on evaluation of a reward function defined by a volt-var optimization objective.

9. The method according to claim 8, comprising perturbing the logits with a random noise to create biased samples representing differentiable approximations of samples of the categorical distribution of the predicted actions, wherein the straight through estimator is used to create the discretized vector representation of the predicted actions by correcting a bias in a forward pass, and backpropagate the differentiable approximations to compute a gradient of the policy loss for updating the learnable parameters.

10. The method according to claim 9, wherein the straight-through estimator includes a straight-through Gumbel-Softmax estimator.

11. The method according to any of claims 9 and 10, wherein the discretized vector representation of the predicted actions includes a one-hot vector encoding of the biased samples.

12. The method according to claim 11, wherein the linear transformation comprises an inner product of the one-hot vector and the vector $[0,1, ... n - 1]$, where $n$ denotes a dimensionality of the one-hot vector defined by the number of switchable states of the respective discretely controllable device.

13. The method according to any of claims 8 to 12, wherein the reinforcement learning is implemented using a soft actor-critic algorithm.

14. A non-transitory computer-readable storage medium including instructions that, when processed by a computing system, configure the computing system to perform the method according to any of claims 1 to 13.

15. A system for controlling a power distribution system comprising a number of controllable devices, wherein at least some of the controllable devices are discretely controllable devices operable in discrete switchable states, the system comprising:

a plurality of meters for communicating measurement signals from the power distribution system,
a computing system, comprising:

one or more processors, and
a memory storing algorithmic modules executable by the one or more processors, the algorithmic modules comprising:

a state estimation engine configured to define a system state based on observations acquired via the measurement signals, and
a volt-var control engine configured to:

process the system state using a reinforcement learned control policy comprising a deep learning model to output a control action that includes respective integer actions for the discretely controllable devices, wherein the integer actions are determined by: using learned parameters of the deep learning model to compute logits for a categorical distribution of predicted actions from the system state where the predicted actions define switchable states of the discretely controllable devices, and processing the logits to reduce the categorical distribution of predicted actions for each discretely controllable device to an integer action for that discretely controllable device, and
communicate the control action to the controllable devices for effecting a change of state of one or more of the controllable devices, to regulate voltage and reactive power flow in the power distribution system.

FIG. 1

FIG. 2

FIG. 3

FIG. 4

EP 4 152 546 A1

FIG. 5

FIG. 6

EP 4 152 546 A1

Europäisches Patentamt
European Patent Office
Office européen des brevets

## EUROPEAN SEARCH REPORT

Application Number

EP 22 19 4132

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 113 078 641 A (RES INST ECONOMICS & TECH STATE GRID SHANDONG ELECTRIC POWER CO ET AL.) 6 July 2021 (2021-07-06) * paragraphs [0002], [0005], [0074], [0095] – [0099], [0103] – [0105]; figures 1–9 * | 1–15 | INV. H02J3/18 H02J13/00 |
| Y | US 2020/292608 A1 (YAN WEIZHONG [US] ET AL) 17 September 2020 (2020-09-17) * paragraphs [0086] – [0091]; figure 10 * | 1–15 | |

TECHNICAL FIELDS
SEARCHED (IPC)

H02J

The present search report has been drawn up for all claims

| Place of search | Date of completion of the search | Examiner |
|---|---|---|
| Munich | 8 February 2023 | Bergler, Christian |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
..............................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 22 19 4132

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2023

| Patent document cited in search report | | Publication date | Patent family member(s) | | | Publication date |
|---|---|---|---|---|---|---|
| CN 113078641 | A | 06-07-2021 | NONE | | | |
| US 2020292608 | A1 | 17-09-2020 | US | 2020292608 | A1 | 17-09-2020 |
| | | | US | 2020293032 | A1 | 17-09-2020 |
| | | | US | 2020293033 | A1 | 17-09-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 22187695

**Non-patent literature cited in the description**

- **TUOMAS HAARNOJA ; AURICK ZHOU ; PIETER ABBEEL ; SERGEY LEVINE.** Soft actor-critic: Off-policy maximum entropy deep reinforcement learning with a stochastic actor. *International conference on machine learning,* 2018, 1861-1870